# EUROPEAN PATENT SPECIFICATION

(11) **EP 3 206 623 B1**
(45) Date of publication and mention of the grant of the patent: **30.01.2019**
(21) Application number: 15802187.3
(22) Date of filing: 12.10.2015
(51) Int. Cl.: A61C 8/00, A61C 13/00, A61C 13/34

(54) **SCREW CHANNEL INSERTION PIECE**
SCHRAUBENKANALEINSATZTEIL
PIÈCE D'INSERTION POUR CANAL DE VISSAGE

(30) Priority: 14.10.2014 HU P1400483
(43) Date of publication of application: 23.08.2017
(73) Proprietor: Elsner, Edvin, 8460 Devecser (HU)
(72) Inventor: Elsner, Edvin, 8460 Devecser (HU)
(74) Representative: Harangozo, Gabor
(86) International application number: PCT/HU2015/050011
(87) International publication number: WO 2016/059444

(56) References cited:
- WO-A2-2013/014643
- FR-A1- 2 766 354
- KR-A- 20140 008 251
- US-A- 5 873 721
- US-A1- 2014 154 643

## Description

The invention relates to a screw channel insertion piece for forming the casting mould of the screw channel of the frame supporting a dental device. Advantageously, the dental device built on the finished frame is fixed to the implant(s) implanted in the jaw-bone by means of an interface. The casting mould is prepared on the basis of the laboratory analogue made by the dentist on the basis of the impression of the implants implanted in the jaw-bone. The position and the direction of the analogue implants correspond to the position and the direction of the implants implanted in the jaw-bone. The casting mould of the frame is formed from a material which melts when heated and is placed in embedding material. When the casting mould is removed from the embedding material the fluid material of the frame is introduced then solidified in the casting mould.

For making false teeth a sample of the teeth bone is taken by the dentist e.g. as it is described in Patent Application HU 14 00350. On the basis of the sample a so called laboratory analogue is made by the dental technician, which exactly corresponds to the position of the implant(s) built in the mouth of the patient. On the basis of the given laboratory analogue there are several possibilities (e.g. casting or CNC machining) to make the dental structure or bridge. In case of CNC technology the frame of the dental device is designed by means of software. In case of casting the frame is modelled in wax by the technician. When software is used the bore-holes for the screws are designed through CAD modelling and the frame is made by using CNC technology e.g. as it is described in Patent Application HU 1100555 and HU 1300140. If the frame is modelled in wax it is difficult for the technician to form a curved screw channel. A straight bore-hole can be made only by means of a continuously adjustable fixing element, and by using a straight insertion piece. With the known solutions only producing of straight bore-holes is possible. During producing the frame the insertion piece fixed on the laboratory analogue is embedded in wax by the technician. The wax forms the frame. The sample prepared in this manner is placed in the non-melting embedding material, the insertion piece is also filled with non-melting material which then becomes hard and the wax together with the insertion piece is baked out from the embedding material. The remaining cavities are filled with molten metal representing the material of the frame. After hardening the finished frame is removed from the embedding material. The filling material is also removed from the bore-hole of the screws which was formed in the frame in the place of the insertion place. Then the dental device is shaped on the finished frame.

False teeth are fixed to the implants integrated in the jawbone by means of screws.

The position of the implants is occasional as it is greatly influenced by the shape of the jawbone. It means that in many cases the implant can only be integrated in the jawbone in such a manner that the opening of the screw channel which serves for fixing the false teeth is positioned visibly i.e. not on the side facing the oral cavity which is not an aesthetic solution. During making the false tooth the screw channel was formed straight, essentially in the direction following the axis of the implant because a straight insertion piece was used which can only be tilted slightly. If it is tilted to a greater extent the fixing screw cannot pass through the bore-hole.

Positioning of the screw channel is more critical when a set of false teeth is integrated because in this case the position of several implants must be considered for ensuring invisibility for the openings of the bore-holes of the screws.

Patent Application HU 1100555 describes a channel formation for a dental superstructure by using a computer controlled device. The superstructure is fixed to the implant integrated in the jaw bone by means of a fixing element through an outlet hole provided with a shoulder and formed in the superstructure. To ensure insertion of the fixing element a channel is formed in the superstructure between an inlet hole formed in the superstructure at its side facing the oral cavity and the shoulder of the outlet hole. The outlet hole having a diameter corresponding to a threaded part of the fixing element is provided in another working process. The axis line of the channel is shaped to follow an arc whose radii pointing to given points of the axis line diverge from the plane of the arc by 0-± 5%. Further, the channel is shaped in such a manner that the sections determined by the planes perpendicular to its axis line are circles with the same diameter whose centres are on this axis line.

This solution is more expensive as it does not use an internal section. The material itself of the superstructure is drilled. Drilling the superstructure is expensive because of the loss of the expensive material of the superstructure. Further, this solution comprises several computer designed operations executed on CNC machine, while the solution of the present invention utilizes casting technology, and a pre-shaped channel is used into which the material of the superstructure does not get in.

Patent Application US 5211561 teaches a coupling device for dental prosthesis. This solution does not describe channel formation.

Patent Application US 5116225 describes an angulated abutment system for affixing a dental prosthesis to an anchor implanted in the jaw bone such that the dental prosthesis can be mounted axially offset from the axis of the implant. Two components of the abutment system are designed in such a manner to allow the dental prosthesis to be adjusted in small angles of rotation. This solution uses a straight channel drilled in a slanting direction. It does not teach channel formation.

Patent Application US 2013/0004915 discloses a dental assembly for vertical attachment of an implant to a dental abutment for restorative dental procedures. This solution concerns a field different from the present invention.

Patent Application 2014/0154643 describes solutions for forming a slanting bore-hole. However, realization of it is problematic. In one of the solutions disclosed in this document a rather large cavity must be formed for receiving the screw as a result of which the frame becomes significantly weaker. In another solution a rotatable screw seat is used. However, it does not give a detailed description about realization of it.

None of the known solutions not even their combinations can provide the solution of the present invention.

US2014/0154643A1 discloses a screw channel insertion piece with the features of the preamble of claim 1.

The aim of the present invention is to provide an insertion piece by means of which the opening of the screws used for fixing the false teeth always faces the oral cavity.

It has been realized that the screw channel having a curved bore-hole can be formed with the casting mould of the frame if the screw channel consists of ball-shaped rings having a spherical surface. In this manner the channel can have essentially regularly bent curves and these bent curves may be rotated in any direction. It has also been realized that if the surface of the base body being in contact with the interface is formed in an angle different from 90° relative to the through-bore, then by applying a dental device fixing element whose angle is continuously adjustable the opening of the bore-hole in which the screw is inserted faces the oral cavity in almost all cases.

Accordingly, the present invention as defined in claim 1 is a screw channel insertion piece for forming the casting mould of the screw channel of the frame supporting a dental device. The dental device built on the finished frame is fixed to the implant(s) implanted in the jaw-bone through an interface by means of a screw. The casting mould is prepared on the basis of the laboratory analogue made by the dentist on the basis of the impression of the implants implanted in the jaw-bone. The position and the direction of the analogue implants in the casting mould correspond to the position and the direction of the implants implanted in the jaw-bone. The casting mould of the frame is formed from a material which melts when heated and is placed in embedding material. When the casting mould is removed from the embedding material the fluid material of the frame is introduced then solidified in the casting mould. The insertion piece comprises a base body fixed to the analogue implant(s) by means of a screw via the interface, an internal section mounted on the base body and a terminating ring each of which is provided with a bore-hole in their centre point. The internal section comprises ball-shaped rings which are fitted in or fitted on each other. The ball-shaped rings and the terminating ring are cylindrically symmetric elements. At least the contacting surface of these rings essentially forms a spherical segment.

Further, when fitted together, the ball-shaped rings and the terminating ring form a curve so that after the dental device is finished, the opening of the screw channel at its end opposite the implant faces the oral cavity.

Preferred embodiments of the invention will be defined by the appended claims.

Detailed description of the invention will be given with reference to the accompanying drawings in which:
Figure 1 is the side view of an embodiment of the insertion piece provided with a screw and an interface, the insertion piece is still in a straight position;
Figure 2 shows the sectional side view of the insertion piece of Figure 1;
Figure 3 is the sectional side view of the screw in the insertion piece of Figure 1;
Figure 4 is the side view of the arrester of the insertion piece of Figure 1;
Figure 5 is the sectional side view of the arrester of Figure 4;
Figure 6 shows the arrester of Figure 4 as viewed from above;
Figure 7 is the perspective view of the arrester of Figure 4;
Figure 8 is the side view of the terminating ring of the insertion piece of Figure 1;
Figure 9 is the sectional side view of the terminating ring of Figure 8;
Figure 10 is the perspective view of the terminating ring of Figure 8;
Figure 11 is the side view of the ball-shaped ring of the insertion piece of Figure 1;
Figure 12 is the sectional side view of the ball-shaped ring of Figure 11;
Figure 13 is the perspective view of the ball-shaped ring of Figure 11;
Figure 14 is the side view of the ball-shaped ring provided with an abutting flange;
Figure 15 is the side view of the base body of the insertion piece of Figure 1;
Figure 16 is the sectional side view of the base body of Figure 15;
Figure 17 is the perspective view of the base body of Figure 15;
Figure 18 is the side view of the insertion piece of Figure 1 adjusted for forming a curved bore-hole;
Figure 19 is the sectional side view of the insertion piece of Figure 18;
Figure 20 is the sectional side view of the screw provided with a flexible shank used in the insertion piece of Figure 18;
Figure 21 is the sectional side view of the screw of the insertion piece of Figure 1 the screw is provided with a releasable shank having a kind of arrester;
Figure 22 is the sectional side view of the screw of the insertion piece of Figure 1 the screw is provided with a releasable shank having a different kind of arrester;
Figure 23 shows the exploded side view of another possible embodiment of the insertion piece still in a straight position;
Figure 24 shows the X-ray image of the component parts of the insertion piece of

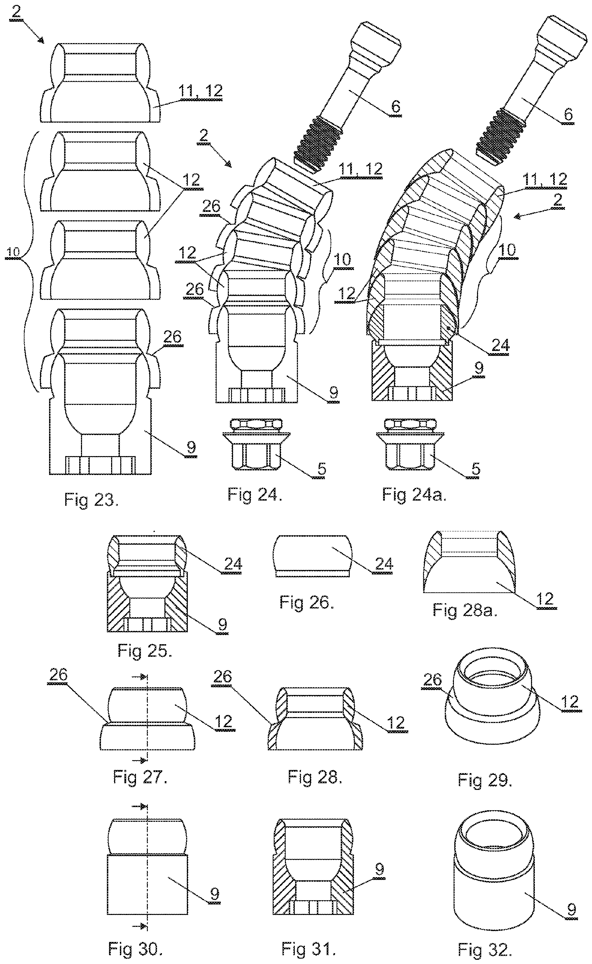

Figure 23 as viewed from the side when assembled for use in a curved bore-hole together with the interface and the screw;
Figure 24a is a sectional side view of the component parts of the insertion piece composed without an arrester, comprising ball-shaped rings when assembled for use in a curved bore-hole together with the interface and the screw. Here, a root ball-shaped ring is inserted between the base body and the first ball-shaped ring;
Figure 25 is the sectional view of the assembled base body and the root ball-shaped ring which is used in the insertion piece of Figure 24a;
Figure 26 is the side view of the root ball-shaped ring;
Figure 27 is the side view of the ball-shaped ring which is used in the insertion piece of Figure 23;
Figure 28 is the sectional view of the ball-shaped ring of Figure 27;
Figure 28a is the sectional view of a ball-shaped ring not having an abutting flange;
Figure 29 is the perspective view of the ball-shaped ring of Figure 27;
Figure 30 is the side view of the base body and the root ball-shaped ring formed in one piece as used in the insertion piece of Figure 23;
Figure 31 is the side view of the component part of Figure 30;
Figure 32 is the perspective view of the component part of Figure 30;

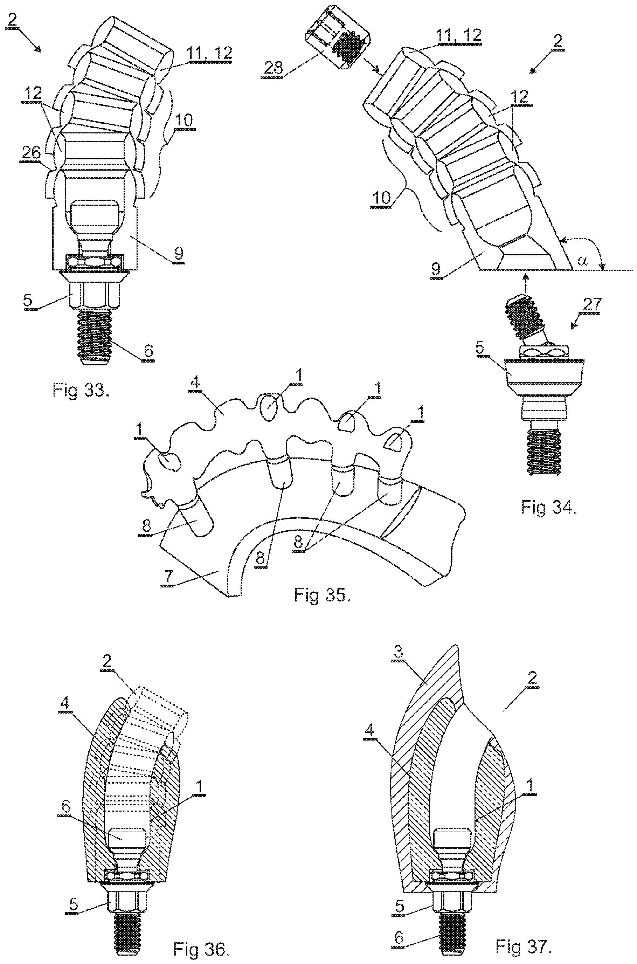

Figure 33 is the X-ray image of the assembled insertion piece of Figure 24 provided with the interface and the screw;
Figure 34 is the X-ray image of the assembled component parts of the insertion piece embodied with a tiltable interface screw as viewed from the side, here the lower plane of the base body has a slanting surface;
Figure 35 is the perspective view of a portion of the frame as it is connected to the analogue implants inserted in the laboratory analogue;
Figure 36 is the sectional side view of the cast frame after the insertion piece (and the wax) is removed by applying heat.
Figure 37 is the sectional side view of the dental device formed on the frame of Figure 36.

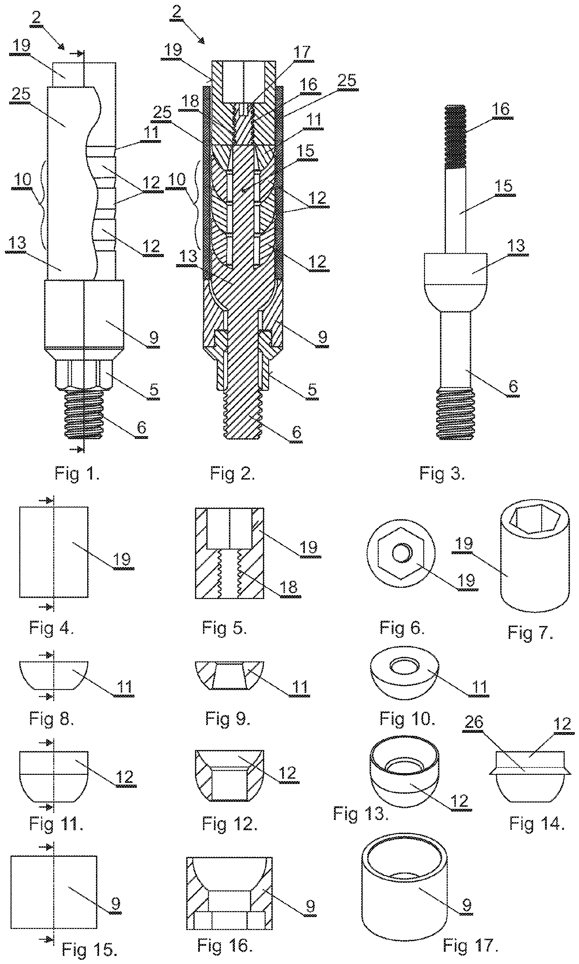

The screw channel 1 insertion piece 2 is suitable for forming the casting mould of the frame 4 supporting a dental device 3. The technology for forming the frame 4 is known. The dental device 3 is accomplished on frame 4. Advantageously, the dental device 3 built on the frame 4 is fixed to the implants implanted in the jaw-bone by means of screw 6 through interface 5. In earlier solutions only a straight screw channel could be produced in a direction corresponding to the direction of the implants or it could be slightly tilted by forming a wide screw channel for using a straight tubular insertion piece. Essentially, the curved screw channel 1 according to the invention (Figures 36 and 37) is formed by using the known technology. The casting mould is prepared on the basis of the laboratory analogue 7 made by the dentist on the basis of the impression of the implants implanted in the jaw-bone. The position and the direction of the analogue implants 8 correspond to the position and the direction of the implants implanted in the jaw-bone (Figure 35). The casting mould of the frame 4 and the insertion piece representing the casting mould of the screw channel are usually formed from a material advantageously wax, plastic, etc. which melts when heated. The insertion piece 2 of the screw channel 1 is not necessarily made of a material which melts when heat is applied as it is described in some of the solutions of the present invention (Figures 1-17). Then the insertion piece of the screw channel is filled in with a material which hardens. The casting mould formed in such a manner is then placed in the still malleable embedding material. After hardening of the embedding material the parts of the casting mould which melt when heat is applied are removed from the embedding material. Then the fluid material of the frame 4 is introduced in the casting mould and after its hardening the frame 4 is removed.

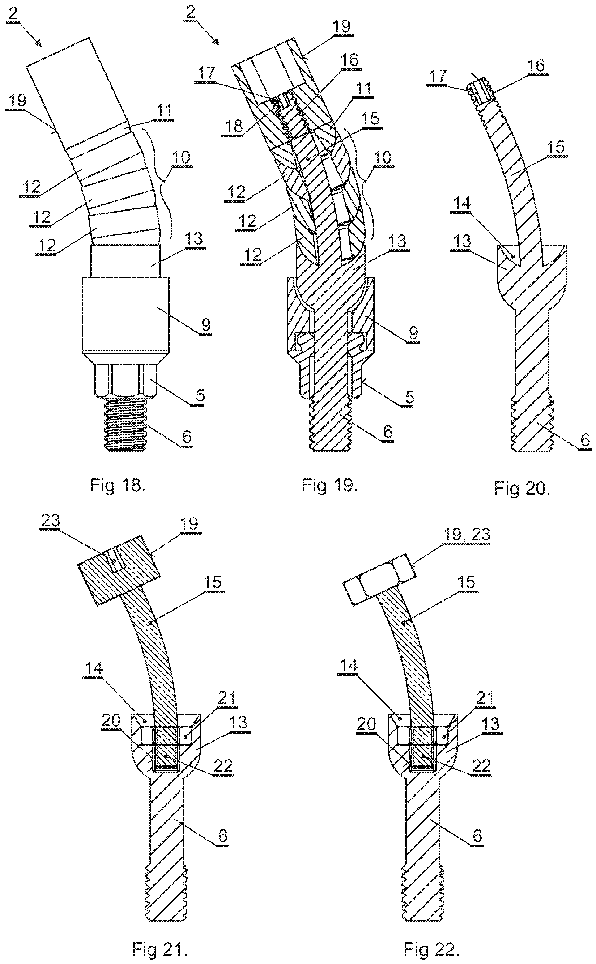

The insertion piece 2 according to the present invention comprises a base body 9 fixed in the analogue implant(s) 8 by means of screw 6 through interface 5, an internal section 10 mounted on the base body 9 and a terminating ring 11 (Figures 8-10, 23-24a, 33 and 34) each of which is provided with a bore-hole in their centre point (Figures 1, 2, 18, 19, 23, 24, 24a, 33 and 34). The internal section 10 comprises ball-shaped rings 12 fitted into or fitted onto each other (Figures 1, 2 and 11-14). The ball-shaped rings 12 and the terminating ring 11 are cylindrically symmetric elements having a surface forming an essentially spherical segment at least at their contacting portion. The ball-shaped rings 12 and the terminating ring 11 are fitted into each other in a curve so that when the dental device 3 is finished the opening of the screw channel 1 at its end opposite the analogue implant 8 faces the oral cavity (Figures 18, 19, 24, 24a, 33, 34 and 37).

According to one embodiment of the insertion piece 2 of the present invention the surface of the head 13 of screw 6 opposite the threaded part is a ball seat 14 in the centre point of which a flexible shank 15 is installed in an unreleasable manner (Figures 3 and 20). Advantageously, screw 6 and shank 15 are made in one piece.

At the end of shank 15 opposite the screw 6 thread 16 and tool sleeve 17 for making unfastening or fastening screw 6 possible are provided. Ball-shaped rings 12 are placed continuously, partly fitted into each other on shank 15 for forming the internal section 10 which is closed by terminating ring 11 (Figures 1, 2, 18 and 19). The series of rings assembled in this manner is fixed by an arrester 19 (Figures 4-7).

Arrester 19 is a counternut provided with female thread 18 driven on thread 16. This assembly is fixed to the analogue implant 8 (not shown in the Figures) through base body 9 (Figures 15-17) and interface 5.

In these embodiments if insertion piece 2 with the exception of base body 9 is formed from not thermoplastic material, then insertion piece 2 may be removed after hardening of frame 4. It is easier if insertion piece 2 is placed in a silicone tube 25 when the casting mould is made (Figure 2).

In another embodiment the surface of the head 13 of screw 6 opposite its threaded part is a ball seat 14. In the centre point of ball seat 14 a threaded seat 20 and a seat 21 are provided for making unfastening of screw 6 possible. Similarly to the above described solution the internal section 10 comprising ball-shaped rings 12 is placed in ball seat 14 and closed by terminating ring 11. The flexible shank 15 is led through the bore-holes. At the end of flexible shank 15 facing screw 6 male thread 22 fitting into threaded seat 20 is formed. At its end opposite the screw 6 arrester 19 is provided. Arrester 19 is provided with a gripping element 23 for making fastening or unfastening of flexible shank 15 possible (Figures 21 and 22). Gripping element 23 may have a socket head or may be for example formed as a hexagon-head screw.

According to another embodiment of the insertion piece 2 of the present invention a root ball-shaped ring 24 essentially having the form of a segment of a sphere provided with a bore-hole in its axis of rotation is attached to the base body 9. The root ball-shaped ring 24 and the base body 9 may be formed in one piece (Figures 24, 30-32) or the root ball-shaped ring 24 may be a separate element fitted between base body 9 and ball-shaped ring 12 (Figures 25, 26 and 24a). Internal section 10 comprising sufficient number of ball-shaped rings 12 positioned on each other is placed on root ball-shaped ring 24. The internal section 10 is closed by means of terminating ring 11 which has the same form as ball-shaped rings 12 (Figure 24a).

In order to form the proper boundary of the curve realizable by ball-shaped rings 12 the outer superficies of the ball-shaped ring 12 abutting flange 26 is provided (Figures 14, 23, 24, 27-29, 33 and 34).

If certain points of the frame 4 are fixed into the implant by means of a tiltable interface screw 27 then the included angle α between the basis of the base body 9 being in contact with the surface of the tiltable interface screw 27 and the axis of rotation of the base body 9 is other than right angle. In this case insertion piece 2 is fixed by means of interface nut 28 (Figure 34).

During use of the insertion piece 2 according to the present invention the basic information is provided by the imprint taken of the implants implanted in the jaw bone.

On the basis of this imprint the dental technician makes a laboratory analogue 7 which exactly corresponds to the position of the implant inserted in the jaw bone. For forming the curved bore-hole the dental technician fixes the base body or bodies to the analogue implants 8 in the laboratory analogue 7 through interface(s) by means of a suitable screw 6. Then internal section 10 comprising a number of ball-shaped rings 12 as required for ensuring the proper height is placed on base body 9 and the required curve is set. If application of a tiltable interface screw is required by the position and geometry of the inserted analogue implant 8 then by means of the casting mould made for the tiltable interface screw 27 the base body 9 shaped in the required angle α is placed on tiltable interface screw 27 and fixed by means of interface nut 28. The so obtained angle corrected insertion pieces 2 are connected with thermoplastic material preferably wax used in dentistry and the frame presenting the base of the correct tooth model geometry is formed. Then this frame pattern is screwed off the analogue implant 8 being in the laboratory analogue 7 and is placed in the casting mould used in dentistry. The pattern is burnt out together with the casting mould according to known technology. The wax and the pattern completely burn out from the casting mould. The metal or PEEK material of the frame is filled in the obtained negative pattern. After hardening of the material of frame 4 it is removed from the casting mould. Then dental device 3 needed for the required tooth pattern is formed on frame 4.

If screw channel 1 is formed by using a screw 6 provided with shank 15 then ball-shaped rings 12 representing internal section 10 are placed on shank 15. Thereafter the base body 9 is fixed in the implant through the interface by means of the threaded part of screw 6 then after setting the required curve the internal section 10 terminated by terminating ring 11 is fixed by means of arrester 19. Then the procedure is the same as it was described previously.

If shank 15 and screw 6 are connected with each other in a releasable manner then at first the internal section 10 and terminating ring 11 are placed on base body 9, then the shank is led through the bore holes of the rings and is fastened to screw 6 by means of male thread 22 screwed in threaded seat 20. Fastening and unfastening may be performed by means of gripping element 23 provided on arrester 19 at the end of shank 15. Then the procedure is the same as it was described previously.

If screw 6 provided with shank 15 are connected in a releasable manner then the material of shank 15 is spring steel and the material of screw 6 is metal. The other elements of insertion piece 2 are made of metal or plastic, the base body 9 is made of plastic and the arrester 19 is also made of metal.

The advantage of using the insertion piece according to the invention is that the position and the angle of the bore-hole for the screw can be adjusted optionally. By using a tiltable interface screw and by forming the lower plane of the base body slanting, either tilted curved or tilted straight bore-hole may be formed since the part of the tiltable interface screw at the frame can be set in a required angle where it can be fixed by means of the interface nut.

The channel is formed by a cylindriform component comprising several parts ensuring lateral movement. In this manner a suitably large channel may be formed having a channel mouth facing the oral cavity. The embodiment in which the screw is implemented together with the shank the threaded part of the screw can be connected to the interface and the thread at the end of the shank ensures permanent fixing of the ball-shaped rings. However, the shank may be connected to the screw in a releasable manner. In these embodiments if the insertion piece is made of non-melting material, it may be kept in the casting mould while the wax is burnt out and after that it can be removed from the casting mould before the embedding material is filled in the remaining cavity.

## Claims

1. A screw channel insertion piece for forming a curved screw channel in a dental casting mould, the insertion piece comprising a base body (9) having through-hole , a screw (6) for securing said base body (9) to an implant, and a screw channel part mounted on said base body (9) or said screw (6),
**characterized in that**
said screw channel part comprises an internal section (10) and a terminating ring (11), each of which is provided with a central bore-hole,
wherein said internal section (10) comprises internal rings (12) which are pivotably fitted into or fitted onto each other, said internal rings (12) and said terminating ring (11) are cylindrically symmetric elements,
wherein at least the contacting surfaces of said internal rings (12) and said terminating ring (11) are substantially shaped as a segment of a sphere, and
wherein said internal rings (12) and said terminating ring (11) are adapted to jointly form a curved screw channel part.

2. The insertion piece according to claim 1, wherein the screw channel part is pivotably attached to one end of the screw (6).

3. The insertion piece according to claim 2, wherein a flexible shank (15) is coupled to one end of the screw (6), a free end of said shank (15) being provided with a thread (16) on its outer surface and with a sleeve (17) for receiving a tool for unfastening or fastening said insert piece in a dental casting mould, and wherein said flexible shank (15) is arranged within the rings (11, 12) of the screw channel part.

4. The insertion piece according to claim 3, wherein the flexible shank (15) is releasably attached to said screw (6).

5. The insertion piece according to claim 3, wherein the flexible shank (15) and the screw (6) are formed as one piece.

6. The insertion piece according to any one of claims 3 to 5, wherein an arrester (19) having an internal thread (18) is secured to said flexible shank (15) at its end portion having a thread (16).

7. The insertion piece according to any one of claims 3 to 6, wherein the screw channel part is surrounded by a silicon tube (25).

8. The insertion piece according to claim 1, wherein the screw channel part is pivotably attached to one end of the base body (9) through a root ring (24).

9. The insertion piece according to claim 8, wherein the terminating ring (11) has the same form as the internal rings (12).

## Patentansprüche

1. Schraubenkanaleinsatzteil zum Bilden eines gekrümmten Schraubenkanals in einer Dentalgießform, wobei das Einsatzteil einen Grundkörper (9) mit Durchgangsbohrung, eine Schraube (6) zum Befestigen des Grundkörpers (9) an einem Implantat und ein auf dem Grundkörper (9) oder der Schraube (6) montiertes Schraubenkanalteil umfasst,
**dadurch gekennzeichnet, dass**
das Schraubenkanalteil einen Innenabschnitt (10) und einen Abschlussring (11) umfasst, von denen jeder mit einer zentralen Bohrung versehen ist,
wobei der Innenabschnitt (10) Innenringe (12) umfasst, die schwenkbar ineinander eingesetzt oder aufeinander aufgesetzt sind, wobei die Innenringe (12) und der Abschlussring (11) zylindrisch symmetrische Elemente sind,
wobei mindestens die Kontaktflächen der Innenringe (12) und des Abschlussrings (11) im Wesentlichen als Segment einer Kugel ausgebildet sind, und
wobei die Innenringe (12) und der Abschlussring (11) angepasst sind, um gemeinsam ein gekrümmtes Schraubenkanalteil zu bilden.

2. Einsatzteil nach Anspruch 1, wobei das Schraubenkanalteil schwenkbar an einem Ende der Schraube (6) angebracht ist.

3. Einsatzteil nach Anspruch 2, wobei ein flexibler Schaft (15) mit einem Ende der Schraube (6) gekoppelt ist, wobei ein freies Ende des Schafts (15) mit einem Gewinde (16) an seiner Außenfläche und mit einer Hülse (17) zur Aufnahme eines Werkzeugs zum Lösen oder Feststellen des Einsatzteils in einer Dentalgießform versehen ist, und wobei der flexible Schaft (15) innerhalb der Ringe (11, 12) des Schraubenkanalteils angeordnet ist.

4. Einsatzteil nach Anspruch 3, wobei der flexible Schaft (15) lösbar an der Schraube (6) angebracht ist.

5. Einsatzteil nach Anspruch 3, wobei der flexible Schaft (15) und die Schraube (6) als ein Stück ausgebildet sind.

6. Einsatzteil nach einem der Ansprüche 3 bis 5, wobei eine Arretierung (19) mit einem Innengewinde (18) an dem flexiblen Schaft (15) an seinem Endabschnitt mit einem Gewinde (16) befestigt ist.

7. Einsatzteil nach einem der Ansprüche 3 bis 6, wobei das Schraubenkanalteil von einem Silikonschlauch (25) umgeben ist.

8. Einsatzteil nach Anspruch 1, wobei das Schraubenkanalteil schwenkbar an einem Ende des Grundkörpers (9) über einen Wurzelring (24) angebracht ist.

9. Einsatzteil nach Anspruch 8, wobei der Abschlussring (11) die gleiche Form wie die Innenringe (12) aufweist.

## Revendications

1. Pièce d'insertion pour canal de vissage pour former un canal de vissage incurvé dans un moule de coulage dentaire, la pièce d'insertion comprenant un corps de base (9) présentant une perforation, une vis (6) pour fixer ledit corps de base (9) à un implant, et une partie du canal de vissage montée sur ledit corps de base (9) ou ladite vis (6),
**caractérisée en ce que**
ladite partie du canal de vissage comprend une section interne (10) et une bague de terminaison (11) dont chacune est pourvue d'un trou d'alésage central,
dans laquelle ladite section interne (10) comprend des bagues internes (12) ajustées de façon pivotante les unes sur les autres ou les unes dans les autres, lesdites bagues internes (12) et ladite bague de terminaison (11) sont des éléments de symétrie cylindrique,
dans laquelle au moins les surfaces de contact desdites bagues internes (12) et de ladite bague de terminaison (11) sont substantiellement conçues comme segment de sphère, et dans laquelle lesdites bagues internes (12) et ladite bague de terminaison (11) sont ajustées pour former ensemble une partie du canal de vissage incurvée.

2. Pièce d'insertion selon la revendication 1, dans laquelle la partie du canal de vissage est fixée de façon pivotante à une extrémité de la vis (6).

3. Pièce d'insertion selon la revendication 2, dans laquelle une tige flexible (15) est couplée à une extrémité de la vis (6), une extrémité libre de ladite tige (15) étant munie d'un filetage (16) sur sa surface externe et d'un manchon (17) pour recevoir un outil pour dévisser ou visser ladite pièce d'insertion dans un moule de coulage dentaire, et dans laquelle la tige flexible (15) est agencée sur les bagues (11, 12) de la partie du canal de vissage.

4. Pièce d'insertion selon la revendication 3, dans laquelle le tige flexible (15) est fixée de façon amovible à ladite vis (6).

5. Pièce d'insertion selon la revendication 3, dans laquelle le tige flexible (15) et la vis (6) sont formées d'une pièce.

6. Pièce d'insertion selon l'une quelconque des revendications 3 à 5, dans laquelle le dispositif d'arrêt (19) présentant un filetage interne (18) est fixé à ladite tige flexible (15) en sa partie d'extrémité présentant un filetage (16).

7. Pièce d'insertion selon l'une quelconque des revendications 3 à 6, dans laquelle la partie du canal de vissage est entourée par un tube en silicone (25).

8. Pièce d'insertion selon la revendication 1, dans laquelle la partie du canal de vissage est attachée de façon pivotante à une extrémité du corps de base (9) à travers une bague de la base (24).

9. Pièce d'insertion selon la revendication 8, dans laquelle la bague de terminaison (11) présente la même forme que les bagues internes (12).
